# EUROPEAN PATENT SPECIFICATION

(11) **EP 4 467 928 B1**
(45) Date of publication and mention of the grant of the patent: **25.03.2026**
(21) Application number: 23174564.7
(22) Date of filing: 22.05.2023
(51) Int. Cl.: G01C 19/574, G01P 1/00, G01C 19/5712

(54) **SYMMETRIC DIFFERENTIAL TRANSDUCER**
SYMMETRISCHER DIFFERENTIALWANDLER
TRANSDUCTEUR DIFFERENTIEL SYMETRIQUE

(43) Date of publication of application: 27.11.2024
(73) Proprietor: Murata Manufacturing Co., Ltd., Nagaokakyo-shi, Kyoto 617-8555 (JP)
(72) Inventor: PARTANEN, Mikko, 01710 Vantaa (FI)
(74) Representative: Boco IP Oy Ab

(56) References cited:
- CN-B- 108 828 253
- US-A1- 2013 298 670
- US-A1- 2018 061 243

## Description

### FIELD OF THE DISCLOSURE

This disclosure relates to microelectromechanical devices, and more particularly to capacitive for transducers which can be utilized to drive or measure the motion of mass elements. The present disclosure also concerns the symmetry of mass elements.

### BACKGROUND OF THE DISCLOSURE

Microelectromechanical (MEMS) devices such as accelerometers and gyroscopes can measure acceleration and angular rotation rate by monitoring how small mobile proof masses move in relation to a surrounding fixed structure. Proof masses may be called rotors, and fixed structures may be called stators.

The movement of a proof mass is often measured with capacitive force transducers constructed in and around the proof masses. In gyroscopes, capacitive force transducers can also be used to drive the proof masses into continuous oscillating motion.

Proof masses must be suspended from surrounding fixed structures with flexible suspenders. These suspenders allow the masses to move in relation to the fixed structures when the device undergoes acceleration or angular rotation. However, a general problem in microelectromechanical (MEMS) accelerometers and gyroscopes is that proof masses - since they are flexibly suspended - may also be set in motion by external disturbances which are not intended to be measured. For example, a MEMS sensor which is intended to measure the movement of a vehicle may erroneously register the mechanical vibrations of the vehicle body as vehicle movement.

It is known that the influence of external disturbances can be mitigated by using devices where two proof masses move in anti-phase and a differential force transducer measures the anti-phase movement. The two proof masses move in opposite directions in anti-phase movement. In this arrangement, signal components arising from cophasal disturbances (which shift both proof masses in the same direction) are to some degree automatically cancelled in the measurement.

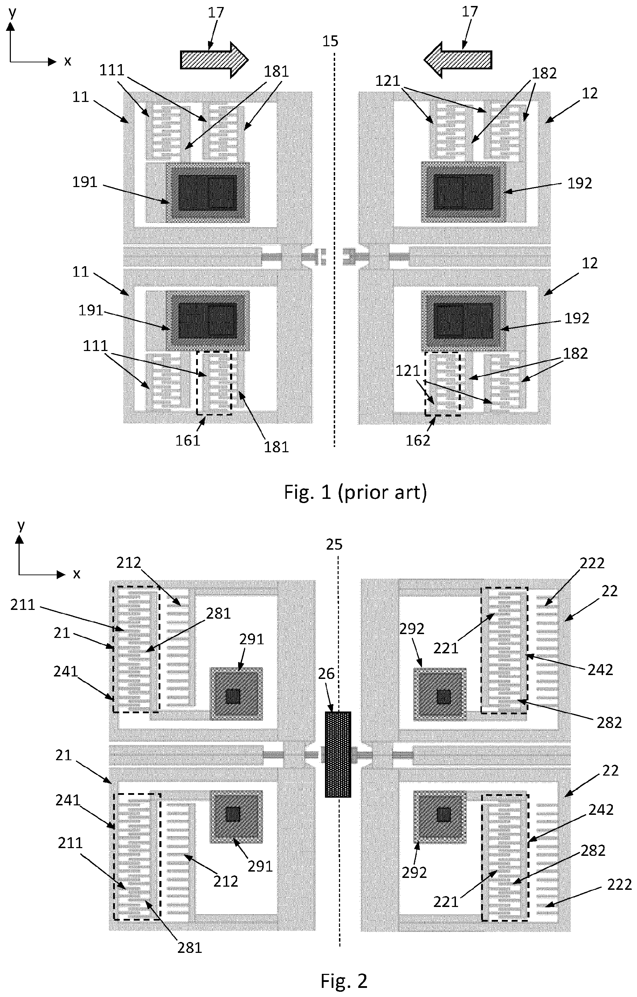

Figure 1 illustrates a gyroscope with a differential force transducer. The principles of differential measurement are the same in accelerometers, as explained later in this disclosure. The gyroscope in figure 1 comprises proof masses 11 and 12 which move in anti-phase toward and away from a central axis 15, as arrows 17 illustrate. The gyroscope may comprise a synchronization structure (not illustrated) which couples proof mass 11 to 12 to each other so that 11 moves to the right when 12 moves to the left, and vice versa. The gyroscope also comprises first and second fixed structures 191 and 192.

A differential capacitive transducer can be constructed by shaping the first proof mass 11 so that it comprises a first set 111 of rotor finger electrodes and shaping the second proof mass 12 so that it comprises a second set 121 of rotor finger electrodes. A set of first (181) and second (182) stator finger electrodes are formed on the fixed structures 191 and 192 so that they are interdigitated with the first (111) and second (121) sets of rotor electrodes. Electrodes 111+181 form a first capacitor while electrodes 121+182 form a second capacitor. The differential transducer comprises both of these capacitors. MEMS proof masses are typically made of silicon, a semiconductive material. This allows the proof mass itself to be used as a capacitor electrode.

A differential transducer is obtained by designing the two capacitors so that their signals have equal magnitude as a function of proof mass displacement, but different polarities. In other words (using the illustrated motion phase 17 as an example), if the transducer is used as a sense transducer, the capacitance increases in the first capacitor 111+181 when the first proof mass 11 moves to the right (due to increasing overlap between fingers). The second proof mass 12 moves simultaneously to the left since the masses move in anti-phase, and the capacitance decreases in the second capacitor 121+182 (due to decreasing overlap). Subtracting the capacitance of the first capacitor from the capacitance of the second capacitor yields a differential signal which increases when the two masses simultaneously move toward the central axis 15 and decreases when they simultaneously move away from the axis. The differential capacitive transducer generates this signal. The automatic error cancellation occurs because the two capacitive signals have opposite polarity. Co-phasal disturbances increase capacitance in one of the capacitors but decrease it in the other. This increase and decrease will ideally cancel each other in the differential signal.

The measurement described above is only one example. The same differential principle can be utilized to accurately measure movement in many directions (in the device plane and out of the device plane), with any number of proof masses (systems with two, four or eight masses, for example), and in many different geometries. The particular disturbance that a given differential measurement can cancel depends on device design. Differential transducers can be used as drive transducers in some devices.

However, differential transducers share a common problem: capacitors of opposite polarity can typically only be obtained with proof mass designs which are asymmetric with respect to the central axis 15.

The problem is elucidated in the example illustrated in figure 1, where we may focus on the geometry of the first proof mass 11 in region 161 and the geometry of the second proof mass 12 in region 162. In order to achieve the polarity difference described above, rotor finger electrodes must lie on the same side (left side in figure 1) of stator finger electrodes in both the first and the second capacitors. Proof masses 11 and 12 can therefore not be reflection-symmetric with respect to the axis 15. If combs 111 and 121 (and thereby proof masses 11 and 12) would be made reflection-symmetric with respect to 15, then the illustrated anti-phase motion 17 would yield signals with equal polarity. No differential transducer could then be constructed.

This lack of reflection-symmetry between proof masses 11 and 12 in figure 1, and in other prior art devices, means that the moments of inertia of the two masses 11 and 12 with respect to axis 15 will not be equal. The two masses may for this reason respond differently to some external linear and angular vibrations, which can lead to measurement errors. In theory, the moments of inertia could be equalized by keeping the electrodes 111 and 121 as they are but changing the other dimensions of one or both proof masses. However, it is in practice difficult to perform this kind of balancing without introducing other errors to the measurement.

Document US2013298670 discloses a vibration gyro having a structure for cancelling a quadrature error generated by structural asymmetricity due to production tolerance and a means for correcting a bias value when an angular velocity is zero.

### BRIEF DESCRIPTION OF THE DISCLOSURE

An object of the present disclosure is to provide a device which alleviates the above disadvantages.

The object of the disclosure is achieved by an arrangement which is characterized by what is stated in the independent claim. The preferred embodiment of the disclosure is disclosed in the dependent claim.

The disclosure is based on the idea of building on the proof mass dummy combs which have no measurement function. The comb structures can be made symmetric with a suitable placement of these dummy combs.

### BRIEF DESCRIPTION OF THE DRAWINGS

In the following the disclosure will be described in greater detail by means of preferred embodiments with reference to the accompanying drawings, in which
Figure 1 illustrates a gyroscope known from the prior art.
Figure 2 illustrates a microelectromechanical device with two proof masses.
Figures 3a - 3d illustrate an embodiment where the anti-phase movement is rotation out of the device plane.

### DETAILED DESCRIPTION OF THE DISCLOSURE

This disclosure describes a microelectromechanical device which comprises a first proof mass and a second proof mass in a device plane. A first axis is in the device plane. The device also comprises two or more fixed stator elements.

The first proof mass lies on a first side of the first axis and comprises a first set of rotor combs. The first set of rotor combs comprises a first set of rotor transducer combs. The second proof mass lies on a second side of the first axis and comprises a second set of rotor combs. The second set of rotor combs comprises a second set of rotor transducer combs. The first and second sides of the first axis are opposite to each other.

The two or more fixed stator elements comprise a first set of stator transducer combs which is interdigitated with the first set of rotor transducer combs, so that the first set of rotor transducer combs and the first set of stator transducer combs form a first capacitor on the first side of the first axis.

The two or more fixed stator elements also comprise a second set of stator transducer combs which is interdigitated with the second set of rotor transducer combs, so that the second set of rotor transducer combs and the second set of stator transducer combs form a second capacitor on the second side of the first axis.

The first and second proof masses are configured to undergo anti-phase movement, wherein the first proof mass moves in a first direction on the first side of the first axis and the second proof mass moves in a second direction on the second side of the first axis, and the first direction is opposite to the second.

The first set of rotor combs also comprises a first set of dummy rotor combs and the second set of rotor combs also comprises a second set of dummy rotor combs. The first set of rotor combs is reflection-symmetric with the second set of rotor combs in relation to the first axis.

The microelectromechanical device is a gyroscope. The first and second proof masses may be physically separated proof masses which can move in opposite directions. In this disclosure the term "proof mass" refers to a body which is rigid, at least in comparison to its suspenders. A proof mass therefore moves as a single body.

In this disclosure the device plane is illustrated and referred to as the xy-plane. The device plane is determined by the device layer. The z-axis, which may be called the vertical axis, is perpendicular to the xy-plane. In this disclosure, the term "vertical", and related terms such as "top" and "bottom", refer only to a direction which is perpendicular to the device plane. They do not imply anything about how the device should be orientated during manufacturing or use.

The center of gravity of each proof mass may lie in the device plane when the proof mass is in its rest position. The proof mass in its rest position when accelerometer isn't experiencing any acceleration or gravitational pull.

Motion where the center of gravity of a proof mass moves in the z-direction may be referred to as out-of-plane motion, or motion out of the device plane. This motion may for example be linear translation in the z-direction. The entire proof mass moves in the same direction in linear translation.

The proof mass may alternatively undergo rotational motion, where it rotates about an axis. Motion where the proof mass undergoes rotation about an axis in the device plane, so that one end of the proof mass moves in a positive z-direction while the other moves in a negative z-direction, is also out-of-plane motion. The center of gravity may remain in the device plane in this rotational out-of-plane motion, or it may move out of the device plane. Motion where the center of gravity of a proof mass moves in the xy-plane, or where the proof mass rotates about a vertical axis, may be referred to as in-plane motion, or motion in the device plane.

The reflection-symmetry described in this disclosure may be reflection-symmetry with respect to the first axis or reflection-symmetry with respect to a vertical plane which comprises the first axis.

Figure 2 illustrates a microelectromechanical device with a first proof mass 21 and a second proof mass 22. The device comprises a first axis 25. The first proof mass 21 is connected to the second proof mass 22 with a connecting part 26.

The connecting part 26 may be a flexible coupling spring which allows the masses to move in opposite directions. The coupling spring may synchronize the anti-phase movement of the two proof masses, as described in more detail below.

The first proof mass 21 comprises a first set of rotor combs. This set includes a first set of rotor transducer combs 211 and a first set of dummy rotor combs 212. Correspondingly, the second set of rotor combs, which is on the second proof mass 22, comprises a second set of rotor transducer combs 221 and a second set of dummy rotor combs 222.

The two or more fixed stator elements may comprise at least one first fixed stator element which is adjacent to the first proof mass, and at least one second fixed stator element which is adjacent to the second proof mass. The first proof mass then forms the first capacitor together with the first fixed stator element, and the second proof mass forms the second capacitor together with the second fixed stator element. The device illustrated in figure 2 comprise two first fixed stator elements 291 and two second fixed stator elements 292. Even though four fixed stator elements are illustrated in figure 2, any other number could be selected depending on the device geometry. There could for example be one first fixed stator element which is adjacent to the first proof mass 21 and one second fixed stator element which is adjacent to the second proof mass 22.

The first fixed stator elements 291 which are adjacent to the first proof mass 21 comprise a first set of stator transducer combs 281. The second fixed stator elements 292 which are adjacent to the second proof mass 22 comprise a second set of stator transducer combs 282.

The device layer may be a device wafer, for example a silicon wafer. Alternatively, the device layer may be a layer which has been deposited on a substrate. The device layer may also be called a structural layer. The device layer may be a silicon layer.

The device layer comprises fixed parts which are immobile in relation to the surrounding device package. The device layer also comprises parts which are mobile in relation to the device package and the fixed parts. These mobile parts include proof masses and flexible suspenders which attach the proof masses to fixed parts.

The micromechanical structures which form the mobile parts can be prepared in the device layer by etching the layer. When the structures are completed, the fixed parts of the device layer may form a supporting body which surrounds the mobile parts in the device plane. The device layer itself may be structurally supported by a separate, thicker support wafer or substrate during manufacturing and/or in the finished accelerometer. The support wafer may be called a handle wafer.

The word "proof mass" refers in this disclosure to a mobile part which is formed in the device layer. The proof masses described in this disclosure may for example be made of silicon. The movement of the proof mass in response to a force is determined by the direction and magnitude of the force, by the flexible properties of the suspenders, and by the size/weight of the proof mass. If multiple proof masses are coupled together, the movement will also be determined by the properties of the coupling springs which join the proof masses to each other.

The proof mass may alternatively be called a rotor, and a fixed structure which is adjacent to the proof mass may be called a stator. This terminology is used in this disclosure to distinguish between capacitor combs formed on the mobile proof mass (rotor combs) and capacitor combs formed on an adjacent fixed structure (stator combs).

It can be seen in figure 2 that the first set of rotor transducer combs 211 form a first capacitor 241 together with the first set of stator transducer combs 281. Correspondingly, the second set of rotor transducer combs 221 form a second capacitor 242 together with the second set of stator transducer combs 282.

In any embodiment in this disclosure, the first and second capacitors may be measurement capacitors. Alternatively, the first and second capacitors may be force-generating capacitors. The first and second capacitors may together form a differential transducer. This transducer may be configured to drive the first and second proof masses into the anti-phase movement if the capacitors are used for force-generating purposes. If they are used for measurement purposes, then the differential transducer may be configured to measure the anti-phase movement of the proof masses.

Optionally, in addition to the anti-phase movement, the first and second proof masses may be configured to undergo also other movement which is not anti-phase. The two proof masses could for example be configured to move simultaneously (common phase) in the y-direction even as they oscillate in anti-phase in the x-direction. The microelectromechanical device may comprise additional capacitive transducers for driving or measuring this other movement. These additional capacitive transducers may comprise additional rotor combs on the first and second proof masses. These additional rotor combs may be symmetric with respect to the first axis in the same way that the first and second sets of rotor combs are.

The fixed stator elements 291 - 292, and stator transducer combs 281 - 282, may in some devices be formed in the fixed parts of the device layer. However, they may in other devices be formed in some other fixed structure which is adjacent to the device layer. The first and second proof masses 21 - 22, and the rotor transducer combs 211 - 221 and rotor dummy combs 212 - 222 which form a part of the proof masses, are formed in the device layer. Rotor transducer combs 211 - 221 are interdigitated with stator transducer combs 281 - 282 in the device plane, as figure 2 illustrates. Rotor dummy combs 212 - 222 are not interdigitated with stator combs.

If the first and second proof masses are made of a semiconductive material such as silicon, then all parts of the first proof mass 21 are at the same electric potential and all parts of the second proof mass 22 are also at the same electric potential. The first and second proof masses may be in direct electrical contact with each other, so that the electric potential of the first and second proof masses 21 and 22 is equal. The first fixed stator elements 291 and the second fixed stator elements 292 may, on the other hand, be electrically separated from each other, so that the two capacitive measurements performed in capacitors 241 and 242 are independent of each other.

The same considerations apply to all embodiments presented in this disclosure. In other words, all proof masses (and the combs they include) in any microelectromechanical device described in this disclosure may be at the same electric potential. The stator elements (and the combs they include) which are connected to different proof masses may be electrically separated from each other so that a distinct capacitor is formed at each proof mass.

It can be seen in figure 2 that, in the case of anti-phase linear movement such as 17 in figure 1, the first and second capacitors 241 and 242 have opposite polarity. The capacitance of 241 increases when the capacitance of 242 decreases, and vice versa. This polarity is obtained through the asymmetric shape of the first and second proof masses 21 and 22, as explained above with reference to figure 1.

However, the presence of the dummy rotor combs 212 and 222 on the first and second proof masses, respectively, makes the device in figure 2 different from the one in figure 1. It can be seen that the addition of the dummy rotor combs 212 and 222 to the first and second sets of rotor combs makes these sets reflection-symmetric with respect to the first axis 25. This is because both sets of rotor dummy combs 212 and 222 point in a direction which is opposite to the direction in which rotor transducer combs 211 and 221 point. The first set of rotor dummy combs 212 is reflection-symmetric with the second set of rotor transducer combs 221, while the second set of rotor dummy combs 222 is reflection-symmetric with the first set of rotor transducer combs 211.

In figure 2 the first proof mass 21 in its entirety is also reflection-symmetric with the entirety of the second proof mass 22. The entirety of the first proof mass (including all combs) may be reflection-symmetric with the entirety of the second proof mass in relation to the first axis. This applies to all embodiments in this disclosure.

The rotor dummy combs 212 and 222 are not interdigitated with any stator combs, and therefore they do not form a part of any capacitor. The dummy combs therefore have no electrical function in the microelectromechanical device. They only provide symmetry, and thereby mechanical balancing.

Various options relating to the number of proof masses and the type of anti-phase movement are presented below. The differential transducer which is formed by the first and second capacitors, is used as a drive-sense transducer which measures the primary oscillation motion driven by a drive transducer. In accelerometers, the differential transducer may be used as a sense transducer which measures proof mass movement caused by acceleration. The benefits of symmetry are the same regardless of the function.

Four proof masses are illustrated in some embodiments. The symmetry which was discussed in detail with reference to figure 2 can be implemented in relation to two different axes in these embodiments.

In addition to the parts which were discussed above with reference to figure 2, in four-mass embodiments the device also comprises a third proof mass and a fourth proof mass in the device plane and a second axis in the device plane. The device also comprises two or more additional fixed stator elements. The second axis is perpendicular to the first axis and crosses the first axis at a crossing point.

The third proof mass lies on a first side of the second axis and comprises a third set of rotor combs. The third set of rotor combs comprises a third set of rotor transducer combs. The fourth proof mass lies on a second side of the second axis and comprises a fourth set of rotor combs. The fourth set of rotor combs comprises a fourth set of rotor transducer combs. The first and second sides of the second axis are opposite to each other.

The two or more additional fixed stator elements comprise a third set of stator transducer combs which is interdigitated with the third set of rotor transducer combs, so that the third set of rotor transducer combs and the third set of stator transducer combs form a third capacitor on the first side of the second axis.

The two or more additional fixed stator elements also comprise a fourth set of stator transducer combs which is interdigitated with the fourth set of rotor transducer combs, so that the fourth set of rotor transducer combs and the fourth set of stator transducer combs form a fourth capacitor on the second side of the second axis.

The third and fourth proof masses are configured to undergo anti-phase movement, wherein the third proof mass moves in a first direction on the first side of the second axis and the fourth proof mass moves in a second direction on the second side of the second axis, and the first direction is opposite to the second.

The third set of rotor combs also comprises a third set of dummy rotor combs and the fourth set of rotor combs also comprises a fourth set of dummy rotor combs, and the first, second, third and fourth sets of rotor combs may be point-symmetric in relation to the crossing point.

Alternatively, the third and fourth sets of rotor combs may be mirror-symmetric in relation to the second axis. The entirety of the third proof mass may be reflection-symmetric with the entirety of the fourth proof mass in relation to the second axis.

In an example not forming part of the invention, the anti-phase movement may be linear translation in the device plane, for example the kind that arrows 17 illustrate in figure 1.

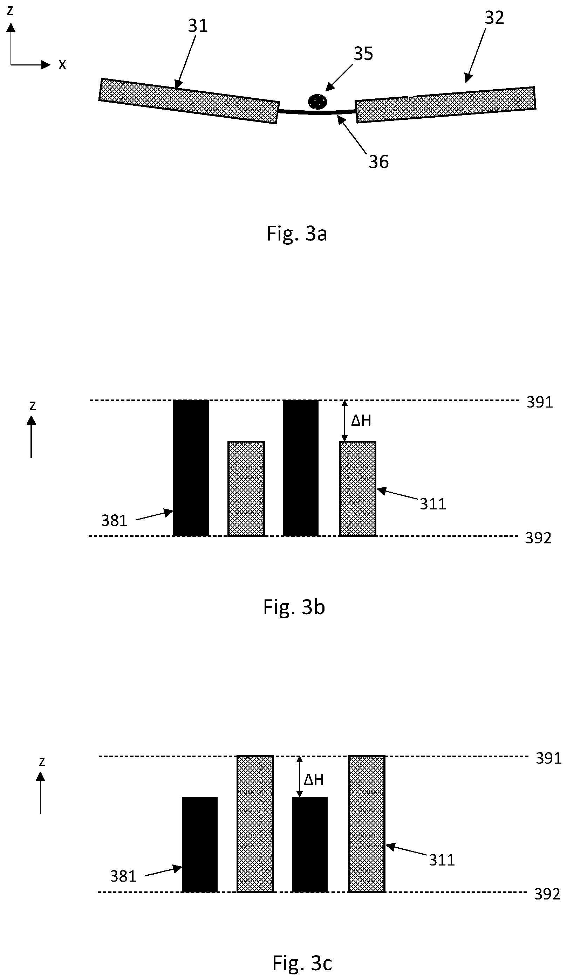

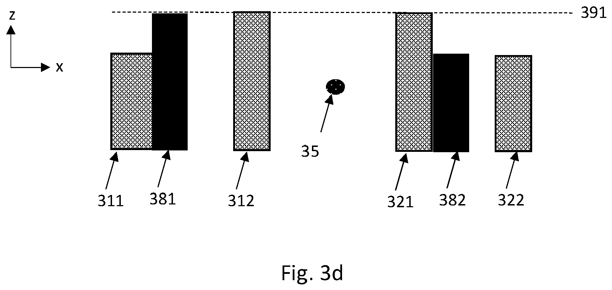

In the iinvention, the anti-phase movement may be rotation out of the device plane. This rotation may be oscillating back-and-forth movement. This kind of movement is illustrated in figure 3a, where reference numbers 31, 32, 35 and 36 correspond to reference numbers 21, 22, 25 and 26, respectively, in figure 2. The first and second proof masses 31 and 32 may for example be suspended with their respective suspension structures so that acceleration in the z-direction rotates them as figure 3 illustrates. Alternatively, the illustrated anti-phase movement could be generated by a drive transducer which sets the two masses into oscillating anti-phase motion, or it could be cause by the Coriolis force when the device undergoes angular rotation.

The connecting part 36 may be a bendable spring which allows the first and second proof masses 31 and 32 to rotate in opposite out-of-plane directions. The connecting part 36 may bend flexibly in the out-of-plane direction, as figure 3a illustrates. The connecting part 36 may also synchronize the anti-phase motion of the first and second proof masses 31 and 32.

The first and second sets of rotor combs on the first and second proof masses C1 and C2 may be oriented as figure 2 illustrates, but many other orientations are also possible. Out-of-plane movement may be measured with rotor and stator combs which are interdigitated in the xy-plane. The rotor combs are recessed in the vertical (z) direction in relation to the stator combs.

This may be explained with reference to figures 3b - 3c. which illustrate a vertical cross-section of interdigitated rotor combs 311 and stator combs 381. Both sets of combs have been formed in the device layer. The combs may be formed by etching the device layer in the vertical direction. Top reference line 391 illustrates the vertical level of the top surface of the device layer and bottom reference line 392 illustrates the vertical level of the bottom surface of the device layer.

Rotor combs 311 have been recessed by ΔH in relation to the top reference line 391. Figure 3b illustrates the position of the interdigitated combs when the proof mass (which comprises the rotor combs) is in its rest position. When the proof mass moves in the negative z-direction (downward in figure 3b), the mutual overlap between rotor combs 311 and stator combs 381 will decrease. The movement of the proof mass can therefore be registered as a capacitance change in this transducer. Proof mass movement in the positive z-direction will not change the capacitance as long as the mutual overlap remains unchanged (i.e. as long as the top side of the rotor combs 311 does not move above reference line 391). On the other hand in an example not forming part of the invention, if the stator combs 381 are recessed, as figure 3c shows, then rotor movement in the positive direction will reduce the capacitance but movement in the negative direction will keep the capacitance unchanged.

Movement in the positive direction should be distinguishable from movement in the negative direction in every transducer. Movement in both of these directions can be monitored by implementing the recessing shown in figure 3b in some transducers, and the recessing shown in figure 3c in other transducers. Any combination of such transducers can be included in differential measurement configurations. Furthermore, transducers with recessed combs can also be used to generate a driving force in the z-direction. A voltage applied between the rotor and stator combs in figure 3d will drive the proof mass upward, while a voltage applied between the combs in figure 3c will drive the proof mass downward.

Double-sided recessing, where the bottom side of the rotor or stator combs is also offset from the corresponding bottom reference line 392, is also possible. This option has not been illustrated.

The anti-phase rotation illustrated in figure 3a can be measured or driven with differential transducers where the first set of rotor combs (on the first proof mass 31), is reflection-symmetric with the second set of rotor combs (on the second proof mass 32) in relation to the first axis 35. This could be implemented in many different ways. As in the preceding in-plane embodiment, the main idea is to achieve symmetry by implementing dummy rotor combs which are not paired with any electrically active stator combs.

Figure 3d illustrates one possible arrangement. A first set of rotor transducer combs 311 is interdigitated with a first set of stator measurement combs 381 so that they together form a first capacitor. The second set of rotor transducer combs 321 is interdigitated with a second set of stator measurement combs 382 so that they together form a second capacitor. The interdigitation has not been illustrated in figure 3d. Instead, figure 3d only illustrates which combs have been recessed, in this case from the top reference line 391, and which have not. The distance of the combs from the first axis 35 is also illustrated schematically.

It can be seen in figure 3d that reflection symmetry with respect to a vertical plane which comprises the first axis 35 can be achieved for example by recessing the first set of rotor transducer combs 311 and the second set of rotor dummy combs 322. In the first capacitor formed by 311+381, the rotor transducer combs are recessed, while in the second capacitor 321+382 the stator transducer combs are recessed.

The recessing scheme in figure 3d is a very simple one, and more complicated ones can be implemented. Both the first set of rotor transducer combs 311 and the second set of rotor transducer combs 321 could for example comprise some transducer combs which have been recessed and some which have not been recessed. In general, the recessing pattern of 311 is mirrored in the recessing pattern of the second set of rotor dummy combs 322, and the recessing pattern of 321 is mirrored in the recessing pattern of the first set of rotor dummy combs 312. The rotor transducer combs 381 can be recessed with a pattern which yields the desired differences illustrated in figures 3b and 3c. Any recess pattern mentioned in this paragraph may include double-sided recessing.

## Claims

1. A microelectromechanical device comprising a first proof mass (21, 31) and a second proof mass (22, 32) in a device plane, a first axis (25, 35) in the device plane, and two or more fixed stator elements (291, 292), wherein a vertical direction is perpendicular to the device plane,
- the first proof mass lies on a first side of the first axis and comprises a first set of rotor combs, and the first set of rotor combs comprises a first set of rotor transducer combs (211), and
- the second proof mass lies on a second side of the first axis and comprises a second set of rotor combs, and the second set of rotor combs comprises a second set of rotor transducer combs (221), and the first and second sides of the first axis are opposite to each other, and
- the two or more fixed stator elements comprise a first set of stator transducer combs (281) which is interdigitated with the first set of rotor transducer combs (211), so that the first set of rotor transducer combs and the first set of stator transducer combs form a first capacitor on the first side of the first axis, and
- the two or more fixed stator elements also comprise a second set of stator transducer combs (282) which is interdigitated with the second set of rotor transducer combs (221), so that the second set of rotor transducer combs and the second set of stator transducer combs form a second capacitor on the second side of the first axis, and
- the first and second proof masses are configured to undergo anti-phase movement, wherein the first proof mass moves in a first direction and the second proof mass moves in a second direction, and the first direction is opposite to the second, and
the first set of rotor combs also comprises a first set of dummy rotor combs (212) which are not interdigitated with any stator combs, and the second set of rotor combs also comprises a second set of dummy rotor combs (222) which are not interdigitated with any stator combs, and the first set of rotor combs is reflection-symmetric with the second set of rotor combs in relation to the first axis, and
the microelectromechanical device is a gyroscope and the anti-phase movement is generated by a drive transducer,
**characterized in that** the anti-phase movement is rotation out of the device plane, and the first and second sets of rotor combs are recessed in the vertical direction in relation to the first and second set of stator transducer combs and
the first and second set of rotor combs are reflection-symmetric with respect to a vertical plane which comprises the first axis.

2. A microelectromechanical device according to claim 1, wherein the device also comprises a third proof mass and a fourth proof mass in the device plane, and a second axis in the device plane, and the device also comprises two or more additional fixed stator elements, and the second axis is perpendicular to the first axis and crosses the first axis at a crossing point, wherein
- the third proof mass lies on a first side of the second axis and comprises a third set of rotor combs, and the third set of rotor combs comprises a third set of rotor transducer combs, and
- the fourth proof mass lies on a second side of the second axis and comprises a fourth set of rotor combs, and the fourth set of rotor combs comprises a fourth set of rotor transducer combs, and the first and second sides of the second axis are opposite to each other, and
- the two or more additional fixed stator elements comprise a third set of stator transducer combs which is interdigitated with the third set of rotor transducer combs, so that the third set of rotor transducer combs and the third set of stator transducer combs form a third capacitor on the first side of the second axis, and
- the two or more additional fixed stator elements also comprise a fourth set of stator transducer combs which is interdigitated with the fourth set of rotor transducer combs, so that the fourth set of rotor transducer combs and the fourth set of stator transducer combs form a fourth capacitor on the second side of the second axis, and
- the third and fourth proof masses are configured to undergo anti-phase movement, wherein the third proof mass moves in a first direction on the first side of the second axis and the fourth proof mass moves in a second direction on the second side of the second axis, and the first direction is opposite to the second, and
- the third set of rotor combs also comprises a third set of dummy rotor combs and the fourth set of rotor combs also comprises a fourth set of dummy rotor combs, and the first, second, third and fourth proof sets of rotor combs are point-symmetric in relation to the crossing point.

## Patentansprüche

1. Mikroelektromechanisches Bauelement umfassend eine erste Prüfmasse (21, 31) und eine zweite Prüfmasse (22, 32) in einer Bauelementebene, eine erste Achse (25, 35) in der Bauelementebene und zwei oder mehr feste Statorelemente (291, 292), wobei eine vertikale Richtung senkrecht zur Bauelementebene ist,
- die erste Prüfmasse auf einer ersten Seite der ersten Achse liegt und einen ersten Satz von Rotorkämmen umfasst und der erste Satz von Rotorkämmen einen ersten Satz von Rotorwandlerkämmen (211) umfasst, und
- die zweite Prüfmasse auf einer zweiten Seite der ersten Achse liegt und einen zweiten Satz von Rotorkämmen umfasst und der zweite Satz von Rotorkämmen einen zweiten Satz von Rotorwandlerkämmen (221) umfasst, und die erste und zweite Seite der ersten Achse einander gegenüberliegen, und
- die zwei oder mehr festen Statorelemente einen ersten Satz von Statorwandlerkämmen (281) umfassen, der mit dem ersten Satz von Rotorwandlerkämmen (211) verschränkt ist, so dass der erste Satz von Rotorwandlerkämmen und der erste Satz von Statorwandlerkämmen einen ersten Kondensator auf der ersten Seite der ersten Achse bilden, und
- die zwei oder mehr festen Statorelemente auch einen zweiten Satz von Statorwandlerkämmen (282) umfassen, der mit dem zweiten Satz von Rotorwandlerkämmen (221) verschränkt ist, so dass der zweite Satz von Rotorwandlerkämmen und der zweite Satz von Statorwandlerkämmen einen zweiten Kondensator auf der zweiten Seite der ersten Achse bilden, und
- die erste und die zweite Prüfmasse so ausgelegt sind, dass sie eine gegenphasige Bewegung erfahren, wobei die erste Prüfmasse sich in einer ersten Richtung bewegt und die zweite Prüfmasse sich in einer zweiten Richtung bewegt und die erste Richtung entgegengesetzt zur zweiten Richtung ist, und
der erste Satz von Rotorkämmen auch einen ersten Satz von scheinbaren Rotorkämmen (212) umfasst, die nicht mit Statorkämmen verschränkt sind, und der zweite Satz von Rotorkämmen auch einen zweiten Satz von scheinbaren Rotorkämmen (222) umfasst, die nicht mit Statorkämmen verschränkt sind, und der erste Satz von Rotorkämmen bezogen auf die erste Achse spiegelsymmetrisch zum zweiten Satz von Rotorkämmen ist, und
das mikroelektromechanische Bauelement ein Gyroskop ist und die gegenphasige Bewegung durch einen Antriebswandler erzeugt wird,
**gekennzeichnet dadurch, dass** die gegenphasige Bewegung eine aus der Bauelementebene herausgehende Rotation ist und der erste und zweite Satz von Rotorkämmen im Verhältnis zum ersten und zweiten Satz von Statorwandlerkämmen in der vertikalen Richtung ausgespart sind und der erste und zweite Satz von Rotorkämmen in Bezug auf eine vertikale Ebene, die die erste Achse umfasst, spiegelsymmetrisch sind.

2. Mikroelektromechanisches Bauelement nach Anspruch 1, wobei das Bauelement auch eine dritte Prüfmasse und eine vierte Prüfmasse in der Bauelementebene und eine zweite Achse in der Bauelementebene umfasst und das Bauelement auch zwei oder mehr zusätzliche feste Statorelemente umfasst und die zweite Achse senkrecht zur ersten Achse ist und die erste Achse an einem Kreuzungspunkt kreuzt, wobei
- die dritte Prüfmasse auf einer ersten Seite der zweiten Achse liegt und einen dritten Satz von Rotorkämmen umfasst und der dritte Satz von Rotorkämmen einen dritten Satz von Rotorwandlerkämmen umfasst, und
- die vierte Prüfmasse auf einer zweiten Seite der zweiten Achse liegt und einen vierten Satz von Rotorkämmen umfasst und der vierte Satz von Rotorkämmen einen vierten Satz von Rotorwandlerkämmen umfasst, und die erste und zweite Seite der zweiten Achse einander gegenüberliegen, und
- die zwei oder mehr zusätzlichen festen Statorelemente einen dritten Satz von Statorwandlerkämmen umfassen, der mit dem dritten Satz von Rotorwandlerkämmen verschränkt ist, so dass der dritte Satz von Rotorwandlerkämmen und der dritte Satz von Statorwandlerkämmen einen dritten Kondensator auf der ersten Seite der zweiten Achse bilden, und
- die zwei oder mehr zusätzlichen festen Statorelemente auch einen vierten Satz von Statorwandlerkämmen umfassen, der mit dem vierten Satz von Rotorwandlerkämmen verschränkt ist, so dass der vierte Satz von Rotorwandlerkämmen und der vierte Satz von Statorwandlerkämmen einen vierten Kondensator auf der zweiten Seite der zweiten Achse bilden, und
- die dritte und die vierte Prüfmasse so ausgelegt sind, dass sie eine gegenphasige Bewegung erfahren, wobei die dritte Prüfmasse sich in einer ersten Richtung auf der ersten Seite der zweiten Achse bewegt und die vierte Prüfmasse sich in einer zweiten Richtung auf der zweiten Seite der zweiten Achse bewegt und die erste Richtung entgegengesetzt zur zweiten Richtung ist, und
- der dritte Satz von Rotorkämmen auch einen dritten Satz von scheinbaren Rotorkämmen umfasst und der vierte Satz von Rotorkämmen auch einen vierten Satz von scheinbaren Rotorkämmen umfasst, und der erste, zweite, dritte und vierte Prüfsatz von Rotorkämmen im Verhältnis zum Kreuzungspunkt punktsymmetrisch sind.

## Revendications

1. Dispositif microélectromécanique comprenant une première masse d'épreuve (21, 31) et une deuxième masse d'épreuve (22, 32) dans un plan de dispositif, un premier axe (25, 35) dans le plan de dispositif et deux ou plus de deux éléments statoriques fixes (291, 292), dans lequel une direction verticale est perpendiculaire au plan de dispositif,
- la première masse d'épreuve est située sur un premier côté du premier axe et comprend un premier ensemble de peignes rotoriques et le premier ensemble de peignes rotoriques comprend un premier ensemble de peignes transducteurs rotoriques (211), et
- la deuxième masse d'épreuve est située sur un deuxième côté du premier axe et comprend un deuxième ensemble de peignes rotoriques et le deuxième ensemble de peignes rotoriques comprend un deuxième ensemble de peignes transducteurs rotoriques (221), et les premier et deuxième côtés du premier axe sont opposés l'un à l'autre, et
- les deux ou plus de deux éléments statoriques fixes comprennent un premier ensemble de peignes transducteurs statoriques (281) qui est interdigité avec le premier ensemble de peignes transducteurs rotoriques (211) de telle sorte que le premier ensemble de peignes transducteurs rotoriques et le premier ensemble de peignes transducteurs statoriques forment un premier condensateur sur le premier côté du premier axe, et
- les deux ou plus de deux éléments statoriques fixes comprennent également un deuxième ensemble de peignes transducteurs statoriques (282) qui est interdigité avec le deuxième ensemble de peignes transducteurs rotoriques (221) de telle sorte que le deuxième ensemble de peignes transducteurs rotoriques et le deuxième ensemble de peignes transducteurs statoriques forment un deuxième condensateur sur le deuxième côté du premier axe, et
- les première et deuxième masses d'épreuve sont configurées pour subir un mouvement en antiphase, la première masse d'épreuve se déplaçant dans une première direction et la deuxième masse d'épreuve se déplaçant dans une deuxième direction, et la première direction étant opposée à la deuxième direction, et
le premier ensemble de peignes rotoriques comprend également un premier ensemble de peignes rotoriques factices (212) qui ne sont interdigités avec aucun peigne statorique, et le deuxième ensemble de peignes rotoriques comprend également un deuxième ensemble de peignes rotoriques factices (222) qui ne sont interdigités avec aucun peigne statorique, et le premier ensemble de peignes rotoriques est symétrique par réflexion sur le premier axe par rapport au deuxième ensemble de peignes rotoriques, et
le dispositif microélectromécanique est un gyroscope et le mouvement en antiphase est généré par un transducteur d'entraînement,
**caractérisé en ce que** le mouvement en antiphase est une rotation hors du plan de dispositif, et les premier et deuxième ensembles de peignes rotoriques sont évidés dans la direction verticale par rapport aux premier et deuxième ensembles de peignes transducteurs statoriques, et les premier et deuxième ensembles de peignes rotoriques sont symétriques par réflexion par rapport à un plan vertical qui comprend le premier axe.

2. Dispositif microélectromécanique selon la revendication 1, dans lequel le dispositif comprend également une troisième masse d'épreuve et une quatrième masse d'épreuve dans le plan de dispositif et un deuxième axe dans le plan de dispositif, et le dispositif comprend également deux ou plus de deux éléments statoriques fixes supplémentaires, et le deuxième axe est perpendiculaire au premier axe et croise le premier axe en un point de croisement, dans lequel
- la troisième masse d'épreuve est située sur un premier côté du deuxième axe et comprend un troisième ensemble de peignes rotoriques, et le troisième ensemble de peignes rotoriques comprend un troisième ensemble de peignes transducteurs rotoriques, et
- la quatrième masse d'épreuve est située sur un deuxième côté du deuxième axe et comprend un quatrième ensemble de peignes rotoriques, et le quatrième ensemble de peignes rotoriques comprend un quatrième ensemble de peignes transducteurs rotoriques, et les premier et deuxième côtés du deuxième axe sont opposés l'un à l'autre, et
- les deux ou plus de deux éléments statoriques fixes supplémentaires comprennent un troisième ensemble de peignes transducteurs statoriques qui est interdigité avec le troisième ensemble de peignes transducteurs rotoriques de telle sorte que le troisième ensemble de peignes transducteurs rotoriques et le troisième ensemble de peignes transducteurs statoriques forment un troisième condensateur sur le premier côté du deuxième axe, et
- les deux ou plus de deux éléments statoriques fixes supplémentaires comprennent également un quatrième ensemble de peignes transducteurs statoriques qui est interdigité avec le quatrième ensemble de peignes transducteurs rotoriques de telle sorte que le quatrième ensemble de peignes transducteurs rotoriques et le quatrième ensemble de peignes transducteurs statoriques forment un quatrième condensateur sur le deuxième côté du deuxième axe, et
- les troisième et quatrième masses d'épreuve sont configurées pour subir un mouvement en antiphase, la troisième masse d'épreuve se déplaçant dans une première direction sur le premier côté du deuxième axe et la quatrième masse d'épreuve se déplaçant dans une deuxième direction sur le deuxième côté du deuxième axe, et la première direction étant opposée à la deuxième, et
- le troisième ensemble de peignes rotoriques comprend également un troisième ensemble de peignes rotoriques factices, et le quatrième ensemble de peignes rotoriques comprend également un quatrième ensemble de peignes rotoriques factices, et les premier, deuxième, troisième et quatrième ensembles d'épreuve de peignes rotoriques sont à symétrie centrale par rapport au point de croisement.
